# EUROPEAN PATENT APPLICATION

(11) **EP 1 479 561 A2**
(43) Date of publication of application: **24.11.2004**
(21) Application number: 04011050.4
(22) Date of filing: 10.05.2004
(51) Int. Cl.: B60N 2/70, B60N 2/64

(54) **Support component of a seat**

(30) Priority: 20.05.2003 DE 10322690
(71) Applicant: FICO CABLES, LDA, 4471 Maia (PT)
(72) Inventor: Vilela Barros, Joao Alberto, 4470-263 Vermoim Maia (PT)
(74) Representative: Hess, Peter K., Dipl.-Phys.

(57) **Abstract**

The present invention relates to a support component 1 for a support structure 100 of a seat, in particular of a motor vehicle seat. The support component 1 according to the invention comprises a continuous oblong plane element 10 having an ergonomic shape in view of a back shape of a seated person to be supported and having at least two fastening means 30, 40, wherein said plane element 10 comprises at least one support portion 60, 70 and at least one motional portion 80 having higher flexibility compared to the at least one support portion 60, 70 so that the at least one support portion 60, 70 is adaptable to the back shape by means of the flexibility of the at least one motional portion 80.

## Description

### 1. Field of the invention

The present invention relates to a support component for an inner support structure of a seat, in particular for seats in motor vehicles. This support component forms in particular the transversal elements of a support structure in the inner of a seat which holds the cushioning as well as the cover of such a seat.

### 2. Background of the invention

Known seats as well as seats in motor vehicles comprise an inner support structure and a cushioning with cover. This inner structure mostly consists of a seat frame and a support structure mounted thereon. The frame as well as the support structure are shaped in such a way that they define the shape of the later seat. The cushioning and the cover of the seat serve for the further fashioning of the determined shape and the outer appearance of the seat.

The mentioned support structure mounted within a seat frame is formed by a grid-like structure as already known. This grid-like structure is made of approximately vertically extending carrier elements and of support components arranged transversely thereto. Additionally, the support structure can be configured as an arching mechanic by means of which said support structure is adapted to the curvature of a back of a seated person. A further feature of this arching mechanic in connection with support structures consists in the fact that the position of the support structure can be adapted to the size of the seated person. In this manner, a support of the back of the seated person is achieved reducing the symptoms of fatigue, increasing the comfort of the seat and additionally preventing symptoms of wear as for example during permanent seating in an office chair.

Known grid-like support structures are made of linearly extending carrier elements and also linearly extending support components as disclosed in the EP-A-0 485 483. In the mentioned support structure, the adaptation to the back of a seated person is carried out by means of the above described arching mechanic. The disadvantage of this arrangement consists in the fact that no adaptation of the support structure is executed in the transverse direction relative to the vertebral column of the seated person. Because of this reason, the disclosed support structure cannot provide a lateral support for the back. It is also disadvantageous that no optimal pressure distribution is provided by using this support structure. Very high pressure loads follow in the area of the vertebral column since the same mostly slightly proj ects beyond the plane of the back and, thus, first receives the pressure of the support structure. During longer use of such seats, additionally the damping effect of the cushioning decreases so that the support structure burdens the area around the vertebral column of the seated person in an uncomfortable way.

A further construction of a support structure having an arching mechanic and corresponding support components is known from the DE-A-100 30 65. The support components disclosed therein, are qualified by an increased flexibility. The increased flexibility compared to the linearly extending support components of the EP-A-0 485 483, is achieved by a different construction of the support elements. These support elements comprise at least three parts which include a double Z-shape. Although in this way the flexibility can be increased compared to known support structures, also high manufacturing efforts as well as high space requirements for the installed support components follow. It is also disadvantageous in which way the flexibility of said support elements is adjusted. Different portions of the support element are respectively associated to individual mounting points. As long as these mounting points are mounted within the seat structure, thereby the flexibility of this portion is reduced and the support effect is increased. Based on the increased number of mounting points, higher constructive standards are required in the carrying seat structure. This increases the manufacturing efforts as well as the later costs of the whole seat. As long as the above mentioned additional mounting points for the individual portions of the support elements are not present, the support element of the DE-A-100 30 65 provides a sufficient flexibility wherein, however, the stability is not sufficient to optimally support a seated person.

Following from the above mentioned disadvantages of the prior art, it is therefore the problem of the present invention to provide a support component for a support structure of a seat comprising a simple construction which can be manufactured with lesser efforts and which provides an improved support effect together with a sufficient flexibility for adaptation to the back shape of a seated person.

### 3. Summary of the invention

The above problem is solved by a support component according to claim 1 of the present invention.

The support component according to the present invention for a support structure of a seat, in particular of a seat of a motor vehicle, comprises a continuous oblong plane element having an ergonomic shape in view of a back shape of a seated person to be supported and having at least two fastening means wherein said plane element comprises at least one support portion and at least one motional portion having higher flexibility compared to said at least one support portion so that said at least one support portion is adaptable to the back shape by means of the flexibility of said at least one motional portion.

The support component according to the present invention is qualified by a simple but effective construction providing on the one hand an optimal support of the back of a seated person and on the other hand an optimal flexibility for the adaptation to the back shape of the seated person. This combination of both most important functions of a support component within a support structure of a seat is realized by a continuous plane element respectively a transverse element. The support function and the adaptability according to the invention of the support component is guaranteed by the configuration of alternating support portions and motional portions. Dependent on the area in which the support component according to the present invention is arranged within the inner structure of the seat, it comprises at least one support portion and at least one motional portion. In view of the flexibility, said support portion is more rigidly or more stable configured compared to said motional portion. The support portion serves for the support of partial areas of the back of the seated person wherein the existing cushioning and/or the seat cover serves as a mediator. The motional portion realizes a moveable connection of existing support portions so that an adaptation or a corresponding arrangement of the support portions/the support portion in view of the back to be supported is enabled by means of the flexibility of the motional portions. In order to guarantee an optimal supporting, said plane element or said transverse element of the support structure of the seat is ergonomically shaped, that means it is adapted to the back shape of a seated person to be supported. Preferably according to the invention, even the support portions comprise the mentioned ergonomic shape for realizing a plane abutment of the support portions on the back shape to be supported. By the preferred combination of the motional portions and the support portions according to the invention, i.e. the combination of portions of the oblong plane element having different grades of flexibility, an optimal support of the seated person as well as an optimal adaptation to the back shape of the person to be supported is achieved.

According to a preferred embodiment of the present invention, the at least one support portion is reinforced by a sandwich structure in comparison to the at least one motional portion.

According to a further preferred embodiment, the at least one support portion is reinforced by a stabilizing structure, preferably strengthening ribs and/or a profile, in comparison to the at least one motional portion.

The flexibility of the oblong plane element is preferably according to the invention provided by the use of a corresponding flexible or resilient material. In order to minimize this flexibility in the respective support portions so that an optimal support of the back of the seated person is guaranteed, different preferred embodiments of the support portions according to the present invention are used. According to a first preferred embodiment, the at least one support portion is reinforced by means of a sandwich structure reducing the flexibility and enhancing the support properties. The sandwich structure is formed by the fastening of a further material layer onto said oblong plane element in the region of said support portion. This further material layer is preferably formed according to the invention by a material having a less flexibility. It is however also preferred according to the invention, to apply a further layer of the same material of which the oblong plane element is made. By this further material layer and the sandwich structure following therefrom, the thickness of the plane element in the respective support portion is increased whereby also the flexibility is reduced. It is also preferred according to the invention, to apply several additional layers of the same or varying materials to arbitrarily adjust the flexibility of the support portion.

According to a further preferred embodiment of the present invention, the flexibility of the support portion is achieved by the arrangement of a stabilizing structure in these support portions. Such preferred stabilizing structure according to the invention is for example formed by strengthening ribs at the rear side of said oblong plane element. A further preferred embodiment consists in the provision of a profile in the longitudinal direction or in the transversal direction of the plane element in the corresponding support portion. Such profiles and such strengthening ribs reduce the flexibility so that the support portion maintains its shape under loading by the seated person and so that it contributes to the relief of the back of the seated person.

According to a further preferred embodiment of the present invention, the at least two fastening means are arranged near the ends of the plane element and they comprise a strap-like structure.

The support component according to the present invention forms a part of a support structure in the inner of a seat. Preferably according to the invention, the support components are mounted on approximately vertically extending carriers which can be for example curved by means of an arching mechanic. In order to reliably mount the support components according to the invention, at least two fastening means are provided near the ends of the plane element. These fastening means have preferably according to the invention a strap-like structure the shape of which is adapted to the shape of the carrier of the support components. Therefore, the strap-like structures show a circular, an oval, a cornered or a curvilinear cross-section. It is furthermore preferred according to the invention to configure said strap-like structure like a clip connection or to provide fastening mechanisms which are mounted by means of rivets, screws or the like.

According to a further preferred embodiment of the present invention, the at least two fastening means are respectively mounted on said plane element via a flexible web to guarantee a moveable adaptation of the at least one support portion to the back to be supported.

The support component according to the present invention is subjected to pressure loading by the back of a seated person. Based on its flexibility provided preferably according to the invention by the combination of support portions and motional portions, the support components optimally adapt to the respective back shape. To support this process of the adaptation to the back shape by the way of mounting of said support components at the vertically extending carriers in said inner structure of the seat, said fastening means are preferably according to the invention connected to said plane element by means of flexible webs. The flexible webs are preferably according to the invention configured in such a way that limited displacements of the plane element are possible in all three directions in space. Based on this configuration of the fastening means and the webs, the adaptability of the support component mounted in the seat structure is enhanced. It is additionally enabled based on the preferred embodiment of the invention that the support component may follow the movements of the seated person without giving up the support function to be provided.

According to a further preferred embodiment of the present invention, the support component further comprises a guiding structure so that the support component can be displaceably arranged within a seat structure.

The mentioned preferred guiding structure according to the invention serves for the mounting and the moving of this support component within the support structure of a seat. By means of said guiding structure, the vertical position of the support component within a seat can be changed. Further, it provides the possibility to cooperate with an also installed arching mechanic.

The present invention also relates to an arching mechanic for a seat, in particular for a seat in a motor vehicle, which comprises at least one support component according to the above described type.

Furthermore, the present invention comprises a seat, in particular for motor vehicles, having at least a support component according to the above described type.

### 4. Short description of the accompanying drawings

The present invention is described with reference to the accompanying drawings. It is shown:
- Fig. 1: shows a support structure of a seat comprising the preferred support components according to the invention seen from the back;
- Fig. 2: shows a support component according to a preferred embodiment of the present invention in a perspective view;
- Fig. 3: shows a support component having a stabilizing structure according to a preferred embodiment of the present invention seen from above; and
- Fig. 4: shows a support component having a sandwich structure according to a preferred embodiment of the present invention seen from above.

### 5. Detailed description of the preferred embodiments

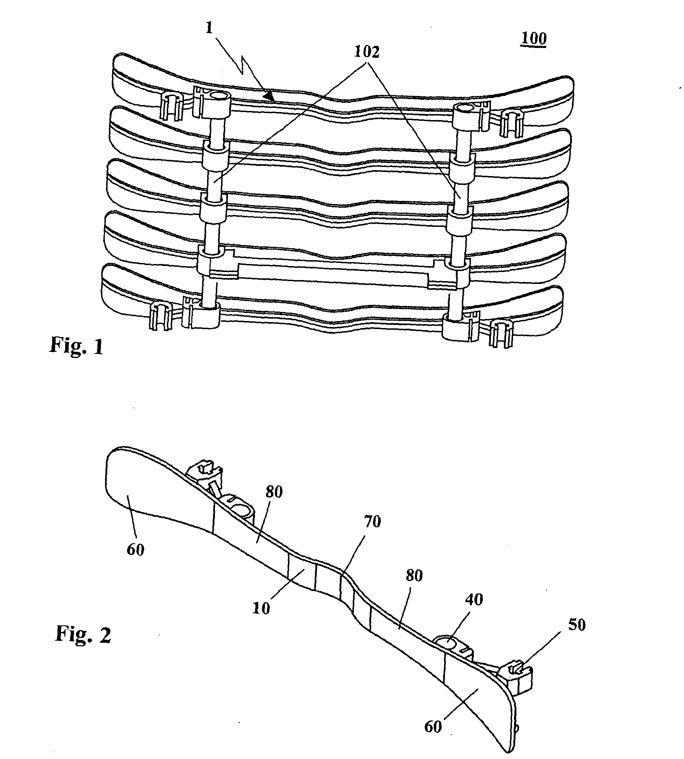

Seats in general and seats in motor vehicles consist of an inner structure having a support structure 100 and a frame (not shown). Said support structure 100 is according to a preferred embodiment shown in Figure 1. The support structure 100 as well as the frame in which it is mounted, define the substantial shape of the later seat. This inner structure of the seat is covered by a cushioning and/or by a seat cover. Beside the shape of the inner structure, also the cushioning serves for the adaptation of the later seat to the body shape of the seated person.

The support structure 100 according to a preferred embodiment of the present invention shown in Figure 1 comprises a plurality of support components 1 mounted to vertical carrier elements 102. The support structure 100 forms in this manner a grid-like structure which will be mounted in a closed or open seat frame. The support structure 100 provides a support plane for the back of a seated person which is formed by means of a plurality of support components 1 from a plurality of individual planes. Corresponding to the shape of the support component 1 and to its adaptability, the shape of the whole support plane of the support structure 100 is preferably varied according to the invention.

The preferred support component 1 according to the invention comprises an oblong plane element 10 as shown in the Figures 2 to 4. It can be seen in the depicted preferred embodiments of the oblong plane element 10 that it is made of a continuous ridge like component. This continuous oblong plane element 10 has the advantage that it can be manufactured with low efforts based on its simple shape and construction. The plane provided by the continuous oblong plane element 10 serves for receiving the pressure forces generated by the back of the seated person. Dependent on the number of the used plane elements 10 within the support structure 100 of the seat, in particular a seat in a motor vehicle, the pressure forces to be supported per plane element 10 vary. Therefore, the combination of a plurality of support components 1 within a support structure 100 provides a defined loading of the respective continuous oblong plane element 10.

According to a further preferred embodiment of the present invention, the continuous oblong plane elements 10 have an ergonomic shape adapted to the general back shape of a seated person. This ergonomic shape is based on an evaluated pressure distribution within a seat generated by the back of a seated person if the person leans against the back rest. This pressure distribution which is preferably according to the invention take as the basis for the configuration of a support structure 100 and of said support component 1 according to the invention provides maximum pressure loadings in the area of the vertebral column of the seated person. The reason consists in the fact that the vertebral column slightly projects beyond the plane of the back and, thus, must receive the highest forces. Starting from the evaluated pressure distribution, the central portion 70 of the continuous oblong plane element 10 is preferably according to the invention configured with a dent for receiving the vertebral column of the seated person (confer Figs. 2 to 4). As soon as the area of the vertebral column of the seated person is arranged within this dent, only the areas of the back adjacent to the vertebral column receive the pressure forces. Based on this ergonomic shape according to the invention of the continuous oblong plane element 10, the vertebral column of the seated person is reliefed, the later seat is configured more comfortable and even so an optimal support in the area of the vertebral column is provided. Further, by this preferred configuration according to the invention, a strong wear of the cushioning and the seat cover in the area of the vertebral column is additionally reduced since the pressure loading is distributed to the adjacent portions.

Beside the configuration of the support component 1 in the area of the vertebral column, a further ergonomic adaptation of the continuous oblong plane element 10 follows from its arc like configuration. This arc like configuration is symmetrically arranged around the central portion 70 of the plane element 10 which forms the vertex of the arc. The arc-like figure is shaped in such a way that it contains the back of the seated person and that it provides in this way a support in the lateral portions of the back. Based on this reason, the outer portions 60 of the plane element 10 are preferably according to the invention configured similar to shovels in order to realize a possibly large lateral support plane. It is also preferred according to the invention to use other planes as shown in Figures 2 to 4 as long as sufficient lateral support is provided by the plane element 10. The shovel-like or enlarged ends of the plane element 10 serve for a better distribution of the acting pressure forces so that the loading of the plane element 10 per unit of area is minimized.

According to a further preferred embodiment of the present invention, the central portions 70 as well as the outer portions 60 of the plane element 10 are configured as support portions. These support portions 60, 70 are preferably according to the invention connected by means of motional portions 80 and they form in this way the whole plane element 10. This preferred configuration according to the invention of said continuous oblong plane element 10 provides portions having different flexibility which guarantee at the same time an optimal adaptation of the support component 1 to the back to be supported and a sufficiently strong support by the support component 1 for the back to be supported.

Preferably according to the invention, the motional portions 80 and the support portion 60, 70 as shown in Figures 2 to 4, differ in their flexibility. The motional portions 80 are more flexible configured in comparison to the support portions 60, 70. Preferably according to the invention, they are made of a resilient material like the whole continuous oblong plane element 10, as for example metal, plastic material, wood or similar materials. By the flexibility inherent to the used material, a moveable connection of the preferred at least two support portions 60, 70 according to the invention within the plane element 10 is guaranteed. It follows therefrom that the support portions 60, 70 can be optimally adapted to the back to be supported or it can be optimally oriented to the same so that these support portions 60, 70 do not essentially change their shapes. It is preferred according to the invention that the support portion 60, 70 essentially remain their shape while aligning. The motional portions 80, thus, provide preferably according to the invention a moveable connection of the support portion 60, 70.

The preferred support portion 60, 70 according to the invention are qualified by a higher stability and, thus, by a lower flexibility compared to the motional portions 80. This increased stability serving for receiving the pressure forces by the back of the seated person, is guaranteed on the one hand by material properties and on the other hand by the construction of the support portions 60, 70. The preferably used material according to the invention of the support portions 60, 70 corresponds to the material of the motional portions 80. Based on the use of the same material for the motional portions 80 and the support portions 60, 70, the manufacturing process of the support component 1 is simplified and temporarily shortened whereby costs are saved.

In order to equip the support portion 60, 70 with a higher stability in comparison to the motional portions 80 in spite of using the same material, preferably according to the invention a sandwich structure 60, 62 and 70, 72 or a stabilizing structure 64, 74 is used. It is also preferred according to the invention to combine the sandwich structures 60, 62 and 70, 72 with said stabilizing structure 64, 74. Based on the preferred sandwich structure according to the invention and the preferred stabilizing structure according to the invention, the flexibility of the support portions 60, 70 is reduced in comparison to the same of the motional portions 80 to guarantee a durable support of the back of the seated person.

In order to increase the stability of the support portion 60, 70 by means of the sandwich structure 60, 62 and 70, 72, a further material layer is applied in these support portions 60, 70 onto the continuous oblong plane element 10. Preferably according to the invention, this additional material layer is made of a different material as the plane element 10. The additionally applied material 62, 72 is less flexible compared to the material of the plane element 10. By the additional material layers 62, 72, the support portions 60, 70 are stabilized in this way and their deforming is substantially prevented. Metals, plastic materials or the same are preferred according to the invention as materials for this further layer 62, 72 as long as they contribute to a stabilization and as long as they can be fastened with low efforts onto the plane element 10.

According to a further preferred embodiment, the further material layers 62, 72 is made of the same material as the plane element 10. Therefore, the sandwich structure 60, 62 and 70, 72 leads to an increase of the thickness of the plane element 10 in the support portion 60, 70 in comparison to the thickness in the motional portions 80. This increase in thickness leading to an increase in stability or a decrease in flexibility, is preferably according to the invention realized during the manufacturing of the plane element 10. In this manner, the application of a further material layer in said support portion 60, 70 is saved during manufacturing of the support component 1.

According to a further preferred embodiment, the stability of the support portion 60, 70 is achieved by a stabilizing structure 74, 64. This stabilizing structure is already formed during the production of the continuous oblong plane element 10. Preferably according to the invention, the stabilizing structure 64, 74 is formed by the ribs 64 arranged at the side of the plane element 10 directed away from the back. These ribs 64 form a profiled reinforcement of the support portions 60, 70 whereby their flexibility is reduced. According to a further preferred embodiment, the stabilizing structure 74 is provided by a shaping or profiling. This profile has preferably according to the invention an oval, a T-shape, an H-shape or a similar shape in its cross-section so that a sufficient stability of the support portion 60, 70 is guaranteed.

It is also preferred according to the invention to combine the stabilizing structure 64, 74 with said sandwich structure 60, 62 and 70, 72 to realize an appropriate flexibility variation between the motional portions 80 and the support portions 60, 70 by preventing much space consumption of the support component 1 according to the invention within the inner seat structure.

Preferably according to the invention, the support component 1 is mounted by means of strap-like fastening means 30 on the substantially vertical carriers of the support structure 100 (confer Figs. 2 to 4). The mentioned strap-like fastening means 30, 40 are adapted in their cross-section to the shape of the substantially vertical carrier elements 102 of the support structure 100. Correspondingly, they comprise an oval, a circular, a curvilinear or a cornered cross-section. Furthermore preferred according to the invention, clip lockings, rivets, screws or the like are used for mounting.

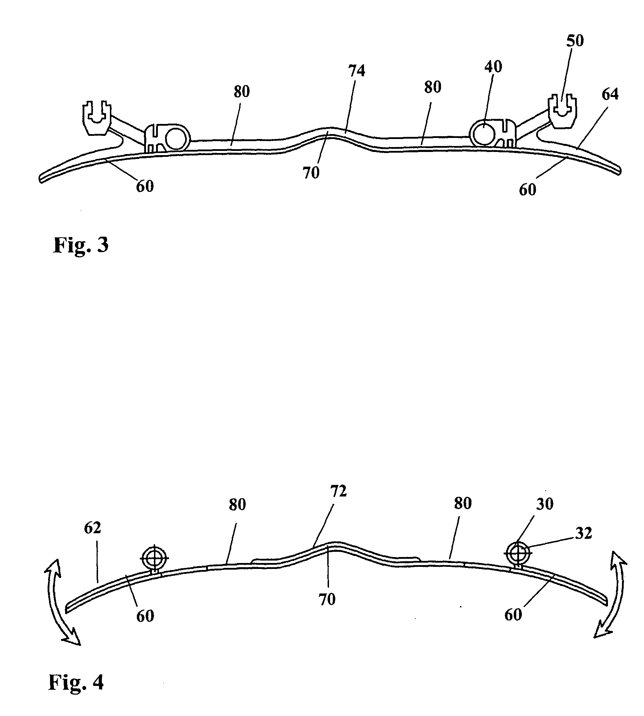

Preferably according to the invention, the strap-like fastening means 40 are rigidly connected to said support component 1 (confer Fig. 3). According to a further preferred embodiment, said strap-like fastening means 30 are flexibly connected to said support component 1. This flexible connection is guaranteed preferably according to the invention by a web 32. This web 32 is made of the same flexible material as the plane element 10. Based on its configuration, the web 32 allows movements of the plane element 10 in all directions of space caused by the loading of the back of the seated person. This freedom of motion of the support component 1 provided by the web 32 enables preferably according to the invention that the plane element 10 can follow the movements of the seated person in a limited extent. In this manner, a permanent support of the back of the seated person is guaranteed also if the person should change its position in the seat.

Beside the mounting of the support component 1 by the fastening means 30, 40, also the motional portions 80 are preferably according to the invention assisted by these fastening means 30, 40. The fastening means 30, 40 enable based on their construction a rotation of the support portions 60 around the carrier elements 102 as far as the loading by the seated person require the same. This possible rotation is shown in Figure 4 by the lateral arrows. By the rotation of the lateral support portions 60 around the carrier elements 102, on the one hand a permanent support of the lateral back portions is guaranteed and on the other hand it is secured in cooperation with the adjacent motional portion 80 that the rotation of the lateral support portion 60 is not transmitted to the central support portion 70. This is based on the fact that the motional portion 80 absorbs a part of the rotation of the lateral support portion 60 based on its flexibility without transmitting the same.

According to a further preferred embodiment of the present invention, the support component 1 comprises a guiding structure 50 which is preferably according to the invention mounted on the rear side of the plane element 10, i.e. at the side directed away from the back of the seated person. This guiding structure 50 serves for the mounting of the support component 1 in an arching mechanic or in another mechanic in order to displace the respective support component 1 in a vertical direction or in order to arch the same by means of an arching mechanic. Preferably according to the invention, the guiding structure 50 comprises to this end a nippers-like opening which engages the respective mechanic or in which the respective mechanic is mounted. This nippers-like configuration can form a clip locking which is latched in a corresponding component or this nippers-like configuration can be mounted by means of rivets, screw, adhesives or the same.

According to a further preferred embodiment, the support components 1 according to the invention are used in a support structure 100 or in connection with an arching mechanic. It is further preferred according to the invention to install the support structure 100 and/or the arching mechanic including said support component 1 in a seat, in particular seats for motor vehicles. By means of this support component 1 and also in connection with a corresponding support structure and/or an arching mechanic, the comfort of the seat is essentially enhanced and the manufacturing costs are reduced.

## Claims

1. A support component (1) for a support structure of a seat, in particular a motor vehicle seat, comprising:
a. a continuous oblong plane element (10) having an ergonomic shape in relation to a back shape of a seated person to be supported and at least two fastening means (30, 40), wherein
b. said plane element (10) has at least one support portion (60, 70) and at least one motional portion (80) having higher flexibility compared to the at least one support portion (60, 70) so that the at least one support portion (60, 70) is adaptable to the back shape by means of the flexibility of the at least one motional portion (80).

2. Support component (1) according to claim 1, wherein said at least one support portion (60, 70) is reinforced by a sandwich structure (62, 72) in comparison to the at least one motional portion (80).

3. Support component (1) according to claim 1, wherein the at least one support portion (60, 70) is reinforced by a stabilizing structure (64, 74), preferably by strengthening ribs and/or a profile, in comparison to the at least one motional portion (80).

4. Support component (1) according to one of the preceding claims, wherein the at least two fastening means (30, 40) are arranged near the ends of the plane element (10) and wherein they comprise a strap-like structure.

5. Support component (1) according to claim 4, wherein the at least two fastening means (30) are respectively mounted via a flexible web (32) on said plane element (10) in order to guarantee a moveable adaptation of the at least one support portion (60, 70) to the back shape to be supported.

6. Support component (1) according to one of the preceding claims, further comprising a guiding structure (50) so that the support component (1) is displaceably arrangeable in a seat structure.

7. An arching mechanic for a seat, in particular for a seat in a motor vehicle, comprising at least one support component (1) according to the claims 1 to 6.

8. A seat, in particular for motor vehicles, comprising at least one support component (1) according to the claims 1 to 6.
